# EUROPEAN PATENT APPLICATION

(11) **EP 4 353 760 A1**
(43) Date of publication of application: **17.04.2024**
(21) Application number: 22201244.5
(22) Date of filing: 13.10.2022
(51) Int. Cl.: C08F 285/00, C08F 287/00, C08F 290/04, C09J 4/06, C09J 5/00, C09J 9/02, C09J 151/04, C09J 151/06

(54) **CURABLE AND ELECTRICALLY DEBONDABLE ONE-COMPONENT (1K) STRUCTURAL ADHESIVE COMPOSITION**

(71) Applicant: Henkel AG & Co. KGaA, 40589 Düsseldorf (DE)
(72) Inventor: Chou, Kang Wei, 40597 Düsseldorf (DE); Engels, Thomas, 40589 Düsseldorf (DE); Stapf, Stefanie, 45239 Essen (DE); Kamm, Thomas, 51371 Leverkusen (DE)

(57) **Abstract**

The present invention relates to a curable and electrochemically debondable one-component (1K) structural adhesive composition comprising a) a (meth)acrylate monomer selected from the group consisting of hydroxypropyl acrylate, hydroxypropyl methacrylate, hydroxybutyl methacrylate, isobornyl acrylate, isobornyl methacrylate, methyl methacrylate and mixtures thereof; b) an electrolyte selected from the group consisting of 1-butyl-3-methylimidazolium bis(trifluoromethylsulfonyl) imide, 1-pentyl-3-methylimidazolium bis (trifluoromethylsulfonyl) imide, 1-hexyl-3-methylimidazolium bis (trifluoromethylsulfonyl) imide, 1-heptyl-3-methylimidazolium bis (trifluoromethylsulfonyl) imide, 1-octyl-3-methylimidazolium bis (trifluoromethylsulfonyl) imide, 1-nonyl-3-methylimidazolium bis (trifluoromethylsulfonyl) imide, 1-decyl-3-methylimidazolium bis (trifluoromethylsulfonyl) imide, 1-dodecyl-3-methylimidazolium bis (trifluoromethylsulfonyl) imide, 1-tetradecyl-3-methylimidazolium bis (trifluoromethylsulfonyl) imide, 1-hexadecyl-3-methylimidazolium bis (trifluoromethylsulfonyl) imide, 1-octadecyl-3-methylimidazolium bis (trifluoromethylsulfonyl) imide, trihexyltetradecylphosphonium bis (trifluoromethylsulfonyl) amide, and mixtures thereof; c) a co-polymerisable acid; d) an initiator; e) a core shell toughener; and f) a toughener. The composition according to the present invention can withstand harsh conditions (high temperature and high humidity) while maintaining adhesive and debonding properties.

## Description

### Technical field of the invention

The present invention is directed to a curable and electrically debondable one-component (1K) structural adhesive composition which, after curing, may bond substrates together and bear loads within a bonded composite structure, but which can also be electrochemically debonded from particular substrates to which it is applied.

### Technical background of the invention

Adhesive bonds and polymeric coatings are commonly used in the assembly and finishing of manufactured goods. They are used in place of mechanical fasteners, such as screws, bolts and rivets, to provide bonds with reduced machining costs and greater adaptability in the manufacturing process. Adhesive bonds distribute stresses evenly, reduce the possibility of fatigue and seal the joints from corrosive species.

Whilst adhesive bonds offer many advantages over mechanical fasteners, certain disadvantages must also be acknowledged. Firstly, it tends to be difficult to disassemble adhesively bonded objects where this is required in practical applications. Secondly, when an adhesive has been cured *in situ* to bond two substrates together, a cross-linked chemical network is formed: after disassembly of the adhesively bonded objects, that chemical network can in most circumstances not be re-used as an adhesive. These disadvantages have obviously been thrown into focus in those - often resource intensive - industries where it would be beneficial to recycle, re-use or re-purpose manufactured goods.

With regards to the first identified disadvantage, the removal of the adhesive through mechanical processes - such as by sand blasting or by wire brushing - is often precluded, in part because the adhesive is deposited between substrates and is thus either inaccessible or difficult to abrade without corrupting the substrate surfaces. Disassembly through the application of chemicals and / or high temperature might be effective but can be time consuming and complex to perform, particularly if one wishes to preserve a substrate surface having residual adhesive disposed thereof: the aggressive chemicals and / or harsh conditions required will often remove substantially all the adhesive and cause damage to the substrates being separated, rendering them unsuitable for subsequent applications.

As an exemplary case, it is evidently desirable to remove, replace and / or recycle the components of electronic devices - such as laptops and phones - which have been attached within the devices using adhesives. However, such adhesives are typically strong in that they are designed to maintain adhesion both during drop or impact events and across a wide range of operating temperatures and other environmental conditions. If care is not taken, adhesive-bonded device components can therefore be damaged or destroyed when removing the components through mechanical processes, the application of chemicals or high temperature.

Noting these problems, certain authors have sought to develop debondable adhesive compositions, wherein the passage of an electrical current through the cured compositions acts to disrupt the bonding at the interface of the adhesive and the substrate.

US Patent No. 7,465,492 describes a debondable composition comprising: a matrix functionality comprising a monomer selected from the group consisting of acrylics, methacrylics and combinations thereof; a free radical initiator; and, an electrolyte, wherein the electrolyte provides sufficient ionic conductivity to said composition to support a faradaic reaction at a bond formed between the composition and an electrically conductive surface and thus allows the composition to debond from the surface.

US 2007/0269659 describes an adhesive composition debondable at two interfaces, the composition: (i) comprising a polymer and an electrolyte; (ii) facilitating joinder of two surfaces; and, (iii) in response to a voltage applied across both surfaces so as to form an anodic interface and a cathodic interface, debonding from both the anodic and cathodic surfaces.

US 2008/0196828 describes a hot-melt adhesive composition comprising: a thermoplastic component; and, an electrolyte, wherein the electrolyte provides sufficient ionic conductivity to the composition to enable a faradaic reaction at a bond formed between the composition and an electrically conductive surface and to allow the composition to debond from the surface.

WO2017/133864 describes a method for reversibly bonding a first and a second substrate, wherein at least the first substrate is an electrically non-conductive substrate, the method comprising: a) coating the surface of the electrically non-conductive substrate(s) with a conductive ink; b) applying an electrically debondable hot melt adhesive composition to the conductive ink-coated surface of the first substrate and/or the second substrate; c) contacting the first and the second substrates such that the electrically debondable hot melt adhesive composition is interposed between the two substrates; d) allowing formation of an adhesive bond between the two substrates to provide bonded substrates; and, e) applying a voltage to the bonded substrates whereby adhesion at least one interface between the electrically debondable hot melt adhesive composition and a substrate surface is substantially weakened.

WO2021/115771 A1 is directed to a curable and one component (1K) debondable adhesive composition comprising: a) epoxy resin; b) a curing agent for said epoxy resin; c) an electrolyte; and d) an electrically non-conductive filler; wherein said composition comprises at least one of: e) a combination of a solubilizer and a toughener; and, f) electrically conductive particles.

WO 2022/179825 A1 is directed to a curable and electrochemically debondable one-component (1K) adhesive composition comprising, based on the weight of the composition: from 40 to 90 wt.% of i) at least one ethylenically unsaturated non-ionic monomer; from 0.1 to 30 wt.% of ii) non-polymerizable electrolyte; from 0.1 to 10 wt.% of iii) at least one radical generating thermal initiator; from 0 to 20 wt.% of iv) filler; and, from 0 to 20 wt.% of v) toughener.

Despite the advantageous development of electrochemically debondable adhesive compositions, the solvated salt or electrolyte present in electrochemically debondable adhesives is inherently hygroscopic. Therefore, water accumulates over hours or days to saturation levels and impacts the long-term stability and performance of the adhesive. Therefore, there is a need for electrochemically debondable structural adhesives that can withstand harsh conditions (high temperature and high humidity) while maintaining adhesive and debonding properties.

### Short description of the figures

Figure 1 illustrates a bonded structure according to the present invention.
Figure 2 illustrates the initial debonding of the structure upon passage of a current across that structure.

### Summary of the invention

The present invention relates to a curable and electrochemically debondable one-component (1K) structural adhesive composition comprising a) a (meth)acrylate monomer selected from the group consisting of hydroxypropyl acrylate, hydroxypropyl methacrylate, hydroxybutyl methacrylate, isobornyl acrylate, isobornyl methacrylate, methyl methacrylate and mixtures thereof; b) an electrolyte selected from the group consisting of 1-butyl-3-methylimidazolium bis(trifluoromethylsulfonyl) imide, 1-pentyl-3-methylimidazolium bis (trifluoromethylsulfonyl) imide, 1-hexyl-3-methylimidazolium bis (trifluoromethylsulfonyl) imide, 1-heptyl-3-methylimidazolium bis (trifluoromethylsulfonyl) imide, 1-octyl-3-methylimidazolium bis (trifluoromethylsulfonyl) imide, 1-nonyl-3-methylimidazolium bis (trifluoromethylsulfonyl) imide, 1-decyl-3-methylimidazolium bis (trifluoromethylsulfonyl) imide, 1-dodecyl-3-methylimidazolium bis (trifluoromethylsulfonyl) imide, 1-tetradecyl-3-methylimidazolium bis (trifluoromethylsulfonyl) imide, 1-hexadecyl-3-methylimidazolium bis (trifluoromethylsulfonyl) imide, 1-octadecyl-3-methylimidazolium bis (trifluoromethylsulfonyl) imide, trihexyltetradecylphosphonium bis (trifluoromethylsulfonyl) amide, and mixtures thereof; c) a co-polymerisable acid; d) an initiator; e) a core shell toughener; and f) a toughener.

The present invention relates to a cured product of the electrochemically debondable one-component (1K) structural adhesive composition according to the present invention.

The present invention also relates to the use of the electrochemically debondable one-component (1K) structural adhesive composition or the cured product according to the present invention in electronic devices.

The present invention encompasses a bonded structure comprising a) a first substrate having an electrically conductive surface; and, b) a second substrate having an electrically conductive surface; wherein the electrochemically debondable one-component (1K) structural adhesive composition or the cured product according to the present invention is deposited between the electrically conductive surfaces of the first and second substrates.

The present invention also encompasses a method of debonding the bonded structure according to the present invention, the method comprising the steps of: 1) applying a voltage across both surfaces to form an anodic interface and a cathodic interface, preferably voltage of from 5 to 70V is applied for from 1 to 60 minutes; and 2) debonding the surfaces.

### Detailed description of the of the invention

In the following passages the present invention is described in more detail. Each aspect so described may be combined with any other aspect or aspects unless clearly indicated to the contrary. In particular, any feature indicated as being preferred or advantageous may be combined with any other feature or features indicated as being preferred or advantageous.

In the context of the present invention, the terms used are to be construed in accordance with the following definitions, unless a context dictates otherwise.

As used herein, the singular forms "a", "an" and "the" include both singular and plural referents unless the context clearly dictates otherwise.

The terms "comprising", "comprises" and "comprised of" as used herein are synonymous with "including", "includes" or "containing", "contains", and are inclusive or open-ended and do not exclude additional, non-recited members, elements, or method steps. If used, the phrase "*consisting of*" is closed and excludes all additional elements. Further, the phrase "*consisting essentially of*' excludes additional material elements but allows the inclusion of non-material elements that do not substantially change the nature of the invention.

The recitation of numerical end points includes all numbers and fractions subsumed within the respective ranges, as well as the recited end points.

All percentages, parts, proportions and then like mentioned herein are based on weight unless otherwise indicated.

When an amount, a concentration or other values or parameters is/are expressed in form of a range, a preferable range, or a preferable upper limit value and a preferable lower limit value, it should be understood as that any ranges obtained by combining any upper limit or preferable value with any lower limit or preferable value are specifically disclosed, without considering whether the obtained ranges are clearly mentioned in the context.

The terms "*preferred*", "*preferably*", "*desirably*", "*particularly*", "*in particular*" and synonyms thereof, are used frequently herein to refer to embodiments of the disclosure that may afford particular benefits, under certain circumstances. However, the recitation of one or more preferable, preferred, desirable or particular embodiments does not imply that other embodiments are not useful and is not intended to exclude those other embodiments from the scope of the disclosure.

As used throughout this application, the word "*may*" is used in a permissive sense - that is meaning to have the potential to - rather than in the mandatory sense.

As used herein, the term "*one component (1K) composition*" refers to a composition where, during storage of the composition, the composition components are all admixed together but the properties of the composition, including viscosity, remain consistent enough over the time of storage to permit successful utilisation of the composition at a later time.

*"Two-component (2K) compositions"* are understood to be compositions in which a first component/part and a second component/part must be stored in separate vessels because of their (high) reactivity together. The two components/parts are mixed only shortly before application and then react, typically without additional activation, with bond formation and thereby formation of a polymeric network. Herein higher temperatures may be applied in order to accelerate the crosslinking reaction.

As used herein the term "*electrochemically debondable*" means that, after curing of the adhesive, the bond strength can be weakened by at least 50% upon application of an electrical potential of from 5V - 70V for a duration of from 1 to 60 minutes. The cured adhesive is applied between two substrates which are bonded by said adhesive so that an electric current is running through the adhesive bond line. Bond strength is measured by Tensile Lap Shear (TLS) test performed at room temperature and based upon EN 1465:2009 (German version) Based on Adhesives - Determination of tensile lap-shear strength of bonded assemblies.

As used herein, the term "*clean debonding*" refers to that after the debonding, curable and electrochemically debondable one-component (1K) structural adhesive composition is solely on a first substrate or a second substrate, meaning that one of the substrates is substantially free of adhesive. By the term "substantially free of adhesive" is meant herein that there is 5% or less of the adhesive left in the substrate after debonding, wherein the inspection/evaluation is done visually, preferably less than 3% and more preferably less than 1%.

As used herein, the term "*monomer*" refers to a substance that can undergo a polymerization reaction to contribute constitutional units to the chemical structure of a polymer. The term "*monofunctional*", as used herein, refers to the possession of one polymerizable moiety. The term "*polyfunctional*", as used herein, refers to the possession of more than one polymerizable moiety.

As used herein, "*(meth)acryl*" is a shorthand term referring to "*acryl*" and/or "*methacryl*"*.* Thus, the term "*(meth)acrylamide*" refers collectively to acrylamide and methacrylamide.

As used herein, "*structural adhesive*" refers to an adhesive that bonds together components in a load-bearing structure. In other words, the structural adhesive can hold two or more substrates together under stress.

As used herein, "stable under harsh conditions" refers to that after the cure of the adhesive, the bond strength does not drop more than 50% after storage in a climate chamber at 65 °C and 90% relative humidity for 1 week, preferably 2 weeks, more preferably 3 weeks, even more preferably 3 months.

As used herein, "*core shell toughener*" refers to a rubber particle core formed by a polymer comprising an elastomeric or rubbery polymer as a main ingredient and a shell layer formed by a polymer which is graft polymerized onto the core. The shell layer partially or entirely covers the surface of the rubber particle core in the graft polymerization process.

All references cited in the present specification are hereby incorporated by reference in their entirety.

Unless otherwise defined, all terms used in disclosing the invention, including technical and scientific terms, have the meaning as commonly understood by one of the ordinary skilled in the art to which this invention belongs to. By means of further guidance, term definitions are included to better appreciate the teaching of the present invention.

The present invention relates to a curable and electrochemically debondable one-component (1K) structural adhesive composition comprising a) a (meth)acrylate monomer selected from the group consisting of hydroxypropyl acrylate, hydroxypropyl methacrylate, hydroxybutyl methacrylate, isobornyl acrylate, isobornyl methacrylate, methyl methacrylate and mixtures thereof; b) an electrolyte selected from the group consisting of 1-butyl-3-methylimidazolium bis(trifluoromethylsulfonyl) imide, 1-pentyl-3-methylimidazolium bis (trifluoromethylsulfonyl) imide, 1-hexyl-3-methylimidazolium bis (trifluoromethylsulfonyl) imide, 1-heptyl-3-methylimidazolium bis (trifluoromethylsulfonyl) imide, 1-octyl-3-methylimidazolium bis (trifluoromethylsulfonyl) imide, 1-nonyl-3-methylimidazolium bis (trifluoromethylsulfonyl) imide, 1-decyl-3-methylimidazolium bis (trifluoromethylsulfonyl) imide, 1-dodecyl-3-methylimidazolium bis (trifluoromethylsulfonyl) imide, 1-tetradecyl-3-methylimidazolium bis (trifluoromethylsulfonyl) imide, 1-hexadecyl-3-methylimidazolium bis (trifluoromethylsulfonyl) imide, 1-octadecyl-3-methylimidazolium bis (trifluoromethylsulfonyl) imide, trihexyltetradecylphosphonium bis (trifluoromethylsulfonyl) amide, and mixtures thereof; c) a co-polymerisable acid; d) an initiator; e) a core shell toughener; and f) a toughener.

The curable and electrochemically debondable one-component (1K) adhesive composition according to the present invention is a structural adhesive.

The composition according to the present invention provides good initial bonding strength and is effectively debondable, while having a high aging stability, in other words is stable at high temperature, high humidity conditions. The use of compatible electrolytes in hydrophobic adhesive matrices do not compromise the stability of the final adhesive formulation (avoids migration and phase separation of the ionic species). The applicant has found that a combination of an adhesive matrix, an electrolyte and a mixture of core-shell tougheners and tougheners will provide high stability under harsh storage conditions. To mimic conditions that electric devices typically undergo in a hot and high humidity environment, accelerated ageing studies were performed in a climatic chamber at 65 °C and 90% relative humidity up to 3 weeks.

The curable and electrochemically debondable one-component (1K) structural adhesive composition according to the present invention comprises a (meth)acrylate monomer.

The (meth)acrylate monomers form an adhesive polymer. The adhesive polymer forms a linear or crosslinked network, which provides high strength and solvent resistivity. The adhesive polymer should support an electrochemical reaction at the interphase with the conductive substrate. Therefore, it is necessary to have enough ion mobility through the polymer matrix. In a particular embodiment, the adhesive matrix should contain functional groups capable to coordinate ions from the electrolyte, such as alkoxy groups and/or oligoether groups.

Examples of suitable (meth)acrylate monomers for use in the present invention are methyl (meth)acrylate, ethyl (meth)acrylate, n-propyl (meth)acrylate, isopropyl (meth)acrylate, n-butyl(meth)acrylate, isobutyl (meth)acrylate, tert-butyl (meth)acrylate, n-pentyl (meth)acrylate, n-hexyl (meth)acrylate, cyclohexyl (meth)acrylate, n-heptyl (meth)acrylate, n-octyl(meth)acrylate, 2-ethylhexyl-(meth)acrylate, nonyl (meth)acrylate, decyl (meth)acrylate, dodecyl (meth)acrylate, phenyl (meth)acrylate, tolyl (meth)acrylate, benzyl (meth)acrylate, 2-methoxyethyl (meth)acrylate, 3-methoxybutyl (meth)acrylate, 2-hydroxyethyl (meth)acrylate, 2-hydroxypropyl(meth)acrylate, stearyl(meth)acrylate, glycidyl (meth)acrylate, isobornyl (meth)acrylate, 2-aminoethyl (meth)acrylate, y-(meth)acryloyloxypropyl trimethoxysilane, (meth)acrylic acid-ethylene oxide adduct, trifluoromethylmethyl (meth)acrylate, 2-trifluoromethylethyl (meth)acrylate, 2-perfluoro ethylethyl (meth)acrylate, 2-perfluoroethyl-2-perfluorobutylethyl (meth)acrylate, 2-perfluoroethyl (meth)acrylate, perfluoromethyl (meth)acrylate, diperfluorome (meth)acrylate, hydroxypropyl acrylate, hydroxypropyl methacrylate, hydroxybutyl methacrylate, isobornyl acrylate, isobornyl methacrylate, methyl methacrylate and mixtures thereof.

The (meth)acrylate monomer is selected from the group consisting of hydroxypropyl acrylate, hydroxypropyl methacrylate, hydroxybutyl methacrylate, isobornyl acrylate, isobornyl methacrylate, methyl methacrylate and mixtures thereof.

These monomers are preferred because they provide good adhesion strength on metal and glass substrates with a good bond strength.

Suitable commercially available (meth)acrylate monomers for use in the present invention include but are not limited to methylmethacrylate from Sigma Aldrich, isobornyl acrylate and isobornyl methacrylate from Sartomer, 2-hydroxyethyl methacrylate from Acros Organics and 2-hydroxypropyl methacrylate from Alfa Aesar.

The curable and electrochemically debondable one-component (1K) structural adhesive composition according to the present invention may have the (meth)acrylate monomer present from 20 to 55% based on the total weight of the composition, preferably from 23 to 52%, and more preferably from 26 to 50%.

These (meth)acrylate monomer quantities are preferred because they provide ideal viscosity, adhesion and mechanical properties. If quantity would be greater than 55% or below 20% this may negatively affect viscosity, adhesion and mechanical properties.

The curable and electrochemically debondable one-component (1K) structural adhesive composition according to the present invention comprises an electrolyte.

The suitable electrolyte shows good compatibility with the aforementioned polymer matrix. In addition, it is preferred that the electrolyte is homogeneously distributed in the polymer matrix. Good distribution aids to achieve a better stability against harsh storage conditions. Further, it is preferred that the electrolyte provides enough ionic conductivity to support an electrochemical reaction at the interface with the electrically conductive substrate.

The electrolyte comprises or consists of at least one salt in accordance with Formula (I) or Formula (II): 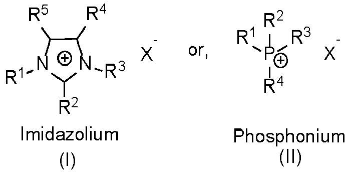 wherein:
R¹, R², R³, R⁴ and R⁵ are independently selected from hydrogen, C₁-C₁₈ alkyl, C₃-C₁₈ cycloalkyl, C₆-C₁₈ aryl, C₇-C₂₄ aralkyl, C₂-C₂₀ alkenyl, -C(O)R^{q}, -C(O)OH, -CN or -NO₂;
R^{q} is C₁-C₆ alkyl; and,
X- is a counter anion.

The electrolyte is selected from the group consisting of 1-butyl-3-methylimidazolium bis(trifluoromethylsulfonyl) imide, 1-pentyl-3-methylimidazolium bis (trifluoromethylsulfonyl) imide, 1-hexyl-3-methylimidazolium bis (trifluoromethylsulfonyl) imide, 1-heptyl-3-methylimidazolium bis (trifluoromethylsulfonyl) imide, 1-octyl-3-methylimidazolium bis (trifluoromethylsulfonyl) imide, 1-nonyl-3-methylimidazolium bis (trifluoromethylsulfonyl) imide, 1-decyl-3-methylimidazolium bis (trifluoromethylsulfonyl) imide, 1-dodecyl-3-methylimidazolium bis (trifluoromethylsulfonyl) imide, 1-tetradecyl-3-methylimidazolium bis (trifluoromethylsulfonyl) imide, 1-hexadecyl-3-methylimidazolium bis (trifluoromethylsulfonyl) imide, 1-octadecyl-3-methylimidazolium bis (trifluoromethylsulfonyl) imide, trihexyltetradecylphosphonium bis (trifluoromethylsulfonyl) imide, and mixtures thereof.

The above listed electrolytes are preferred and used due their hydrophobic nature, which increases the stability of the composition under harsh conditions. Further, these electrolytes contain alkyl chains that promote compatibility with the polymer matrix.

Suitable commercially available electrolytes for use in the present invention include but are not limited to 1-butyl-3-methylimidazolium bis(trifluoromethylsulfonyl)imide (BMIM NTF2) from Sigma Aldrich, Cyphos IL 109 from Solvay, and 1-dodecyl-3-methylimidazolium bis(trifluoromethylsulfonyl)imide from lolitec.

The curable and electrochemically debondable one-component (1K) structural adhesive composition according to the present invention may have the electrolyte present from 6 to 25% based on the total weight of the composition, preferably from 7 to 23%, and more preferably from 10 to 20%.

These electrolyte quantities are preferred because quantity greater than 25% may lead to good debonding effect, however, the cure may be incomplete, and therefore, initial adhesive properties may be adversely affected, whereas low quantities, mainly below 6%, may lead to a lack of debonding effect.

The curable and electrochemically debondable one-component (1K) structural adhesive composition according to the present invention comprises a co-polymerisable acid.

Preferably, the co-polymerisable acid is selected from the group consisting of acrylic acid, methacrylic acid, 2-hydroxyethyl(meth)acrylate phosphoric acid ester, hydroxypropyl(meth)acrylate phosphoric acid ester and mixtures thereof.

Above mentioned co-polymerisable acids are preferred because they are believed to improve adhesion properties of the composition.

Suitable commercially available co-polymerisable acids for use in the present invention include but are not limited to methacrylic acid from Sigma Aldrich, 2-hydroxyethyl(meth)acrylate phosphoric acid ester from Sartomer.

The curable and electrochemically debondable one-component (1K) structural adhesive composition according to the present invention may have the co-polymerisable acid present from 5 to 20% based on the total weight of the composition, preferably from 7 to 18%, and more preferably from 9 to 16%.

These co-polymerizable acid quantities are preferred because quantity greater than 20% may cause corrosion issues, whereas low quantities may lead to an incomplete cure, and therefore, decrease initial adhesion properties.

The acrylic polymer is formed by a radical polymerization, and therefore the curable and electrochemically debondable one-component (1K) structural adhesive composition according to the present invention comprises an initiator.

Suitable initiator for use in the present invention is a peroxide. While certain peroxides, such as dialkyl and diaryl peroxides are useful initiators, hydroperoxides also represent an important class of initiators for the present invention. In this context, whilst hydrogen peroxide itself may be used, it is preferred to employ organic hydroperoxides. Without intention to limit the present invention, representative hydroperoxide compounds have the general formula:

RPOOH

wherein: RP is a hydrocarbon group containing up to 18 carbon atoms, and
preferably wherein: RP is a C₁-C₁₂ alkyl, C₆-C₁₈ aryl or C₇-C₁₈ aralkyl group.

Preferably, the initiator is selected from the group consisting of tert-butyl peroxide, tert-butyl perbenzoate, cumene hydroperoxide, tert-butyl peroxybenzoate, diacetyl peroxide, benzoyl peroxide, tert-butyl peracetate, lauryl peroxide and mixtures thereof, more preferably the initiator is benzoyl peroxide.

The above-mentioned initiators are preferred because they perform well within the overall composition.

Suitable commercially available initiator for use in the present invention include but is not limited to benzoyl peroxide available from PanReac AppliChem.

The curable and electrochemically debondable one-component (1K) structural adhesive composition according to the present invention may have the initiator present from 0.1 to 7% based on the total weight of the composition, preferably from 0.5 to 6%, and more preferably from 1 to 5%.

These initiator quantities are preferred because quantity greater than 7% may lead to excess of an initiator and unwanted reactions may adversary affect the properties of the adhesive composition. Whereas low quantities, mainly below 0.1% may lead to incomplete cure and therefore, poor initial adhesion and mechanical properties.

The curable and electrochemically debondable one-component (1K) structural adhesive composition according to the present invention comprises a core-shell toughener.

The Applicant has found out that by combining defined (meth)acrylate monomers and defined electrolytes with core-shell tougheners, the stability of the adhesive composition under the harsh conditions may be improved.

Suitable core-shell toughener for use in the present invention comprises a single core-shell toughener or a mixture of two or more core-shell tougheners, preferably the core-shell toughener has a shell which is comprised of a polymer or co-polymer of one or more monomers selected from the group consisting of methyl methacrylate, styrene, acrylonitrile, acrylic acid, (meth)acrylamides and mixtures thereof; and a core which is comprised of a homopolymer or copolymer selected from the group consisting of a homopolymer of butadiene; a homopolymer of isoprene; a co-polymer of butadiene with vinyl aromatic monomers, (meth)acrylonitrile or (meth)acrylates; a co-polymer of isoprene with vinyl aromatic monomers, (meth)acrylonitrile or (meth)acrylates; polybutylacrylate; polydimethylsiloxane; crosslinked polydimethylsiloxane, and mixtures thereof.

The above-mentioned core-shell tougheners are preferred because they provide improved properties.

Suitable commercially available core-shell tougheners for use in the present invention include but are not limited to Paraloid EXL 2650A, EXL 2655 and EXL2691 A from The Dow Chemical Company; Clearstrength^{®} XT100 from Arkema Inc., and the Kane Ace^{®} MX series from Kaneka Corporation.

The curable and electrochemically debondable one-component (1K) structural adhesive composition according to the present invention may have the core-shell toughener present from 2 to 15% based on the total weight of the composition, preferably from 3 to 11%, and more preferably from 3 to 10%.

If the quantity of the core-shell tougheners is more than 15% this may lead to too high viscosity and the mechanical performance of the composition may be compromised, whereas quantity below 2% may adversely affect the ageing resistance.

The curable and electrochemically debondable one-component (1K) structural adhesive composition according to the present invention comprises a toughener. It is noted that in this context the toughener is different from the core-shell toughener.

Further, the Applicant has found out that by combining defined (meth)acrylate monomers and defined electrolytes with tougheners, the stability of the adhesive composition under the harsh conditions may be improved.

Suitable tougheners for use in the present invention may be reactive tougheners or non-reactive tougheners or mixtures thereof.

Suitable non-reactive tougheners may be selected from the group consisting of methacrylate terminated polybutadiene rubber, carboxylic terminated copolymer of butadiene and acrylonitrile, carboxylic terminated styrene butadiene rubber, carboxylic terminated styrene butadiene styrene rubber and mixtures thereof.

Suitable reactive toughener may be selected from the group consisting of ethylene/propylene/diene terpolymers; (meth)acrylonitrile-butadiene copolymers; (meth)acrylonitrile-styrene copolymers; (meth)acrylonitrile-butadiene-styrene copolymers; styrene-isoprene-styrene copolymers; styrene-butadiene-styrene copolymers; A-B-A triblock copolymers of which blocks A and B are composed respectively of C₁-C₈ alkyl (meth)acrylates with different glass transition temperatures (Tg), such as co-polymer of polymethyl methacrylate and poly-n-butyl acrylate (PMMA-PnBA-PMMA) and PMMA-(PnBA/2-EHA)-PMMA; triblock copolymers based on methyl (meth)acrylate (MMA), n-butyl acrylate (nBA) and 2-ethylhexyl acrylate (2-EHA), and mixtures thereof.

Above mentioned reactive tougheners are preferred because they provided good overall performance without adversely affecting other properties.

Suitable commercially available reactive toughener for use in the present invention include but is not limited to HYPRO 2000X168 LC VTB from Huntsman.

Suitable commercially available non-reactive tougheners for use in the present invention include but are not limited to Blendex 338 from Galata Chemicals, Kurarity LA 4285 from Kuraray and Nipol 1472X from Zeon Chemicals.

The curable and electrochemically debondable one-component (1K) structural adhesive composition according to the present invention may have the toughener present from 3 to 35% based on the total weight of the composition, preferably from 6 to 26%, and more preferably from 11 to 23.

If the quantity of the reactive toughener is more than 35% this may lead to too high viscosity and the mechanical performance of the composition may be compromised, whereas quantity below 3% may adversely affect the ageing resistance.

The curable and electrochemically debondable one-component (1K) structural adhesive composition according to the present invention may further comprise an urethane (meth)acrylate oligomer. The urethane (meth)acrylate oligomer improves the mechanical properties of the composition.

Suitable urethane acrylate oligomer may be di- or trifunctional aliphatic urethane (meth)acrylate oligomer or di- or trifunctional aromatic urethane (meth)acrylate oligomer.

The urethane (meth) acrylate oligomers may be prepared by reaction of a polyfunctional (meth)acrylate bearing a hydroxyl group with a polyisocyanate. The polyfunctional isocyanate may comprise methylene dicyclohexylisocyanate or 1,6- hexamethylene diisocyanate. The hydroxy-functionalized acrylate may comprise a hydroxyalkyl acrylate such as 2-hydroxyethyl acrylate, 2-hydroxypropyl acrylate, 4-hydroxybutyl acrylate, or polyethylene glycol acrylate. In one embodiment, the multifunctional urethane acrylate oligomer may comprise the reaction product of a polyester polyol, methylene dicyclohexylisocyanate, and hydroxyethyl acrylate.

Suitable commercially available urethane (meth) acrylate oligomers for use in the present invention include but are not limited to aliphatic urethane acrylates are CN-9002, CN9014 NS, CN-980, CN-981, CN-9019, CN1993CG from Sartomer Company Inc; and aromatic urethane triacrylate CN970A60 from Sartomer.

The curable and electrochemically debondable one-component (1K) structural adhesive composition according to the present invention may have the urethane (meth)acrylate oligomer present from 15 to 30% based on the total weight of the composition, preferably from 18 to 28%, and more preferably from 20 to 26.

The curable and electrochemically debondable one-component (1K) structural adhesive composition according to the present invention may further comprise a filler. The presence of fillers in the composition may serve to adjust the viscosity of the composition and to reduce the coefficient of thermal expansion of the adhesive.

There is no particular intention to limit the shape of the particles employed as fillers: particles that are acicular, spherical, ellipsoidal, cylindrical, bead-like, cubic or platelet-like may be used alone or in combination. Moreover, it is envisaged that agglomerates of more than one particle type may be used. Equally, there is no particular intention to limit the size of the particles employed as fillers. However, such fillers will conventionally have an average volume particle size, as measured by laser diffraction / scattering methods, of from 0.01 to 1500 µm, for example from 0.1 to 1000 µm or from 0.1 to 500 µm.

Exemplary fillers include but are not limited to barium sulphate, calcium carbonate, calcium oxide, calcium metasilicate, silica, fumed silica, sand, quartz, zeolites, bentonites, magnesium carbonate, diatomite, alumina, clay, talcum, flint, mica, glass powder, zinc oxide and other ground mineral substances. Short fibres such as glass fibres, glass filament, polyacrylonitrile, carbon fibres, polyethylene fibres can also be added.

Preferably the filler is selected from the group consisting of: calcium carbonate; calcium oxide; calcium metasilicate; zinc oxide; talcum; fumed silica; silica; barium sulphate; and, mixtures thereof.

The use of precipitated and / or fumed (pyrogenic) silica as a rheology control agent in the present compositions is particularly preferred: such precipitated or pyrogenic silica should desirably have a BET surface area of from 25 to 500 m2/g, for example from 100 to 250 m2/g as measured by means of nitrogen adsorption according to DIN 66131.

Suitable commercially available fillers for use in the present invention include but are not limited to Aerosil 200, available from Evonik Industries and ZnO from Sigma Aldrich.

The curable and electrochemically debondable one-component (1K) structural adhesive composition according to the present invention may have the filler present from 0.01 to 10% based on the total weight of the composition, preferably from 0.05 to 7%, and more preferably from 0.1 to 6%.

These ranges are preferred because they will provide ideal viscosity for the composition. If the filler quantity is too high, the viscosity may be too high, whereas too low quantity may lead to too low viscosity.

The curable and electrochemically debondable one-component (1K) structural adhesive composition according to the present invention may further comprise a linear block co-polymer.

Suitable linear block copolymer for use in the present invention may be based on styrene and butadiene with bound styrene of 40% mass.

Suitable commercially available linear block co-polymer for use in the present invention include but is not limited to Kraton D1155 from Kraton Corporation.

The curable and electrochemically debondable one-component (1K) structural adhesive composition according to the present invention may have the linear block co-polymer present from 0.1 to 10% based on the total weight of the composition, preferably from 1 to 8%, and more preferably from 2 to 6%.

The compositions according to the present invention may further contain electrically conductive fillers. There is no particular intention to limit the shape of the particles employed as electrically conductive fillers: particles that are acicular, spherical, ellipsoidal, cylindrical, bead-like, cubic or platelet-like may be used alone or in combination. Moreover, it is envisaged that agglomerates of more than one particle type may be used. Equally, there is no particular intention to limit the size of the particles employed as conductive fillers. However, such conductive fillers will conventionally have an average volume particle size, as measured by laser diffraction / scattering methods, of from 1 to 500 µm, for example from 1 to 200 µm.

Exemplary conductive fillers include, but are not limited to: silver; copper; gold; palladium; platinum; nickel; gold or silver-coated nickel; carbon black; carbon fibre; carbon nanotubes; graphite; aluminium; indium tin oxide; silver coated copper; silver coated aluminium; metallic coated glass spheres; metallic coated filler; metallic coated polymers; silver coated fibre; silver coated spheres; antimony doped tin oxide; conductive nanospheres; nano silver; nano aluminium; nano copper; nano nickel; carbon nanotubes; and, mixtures thereof.

Preferably the electrically conductive filler is selected from the group consisting of silver and carbon black and mixtures thereof.

The curable and electrochemically debondable one-component (1K) structural adhesive composition according to the present invention may have the electrically conductive filler present from 0.01 to 10% based on the total weight of the composition, preferably from 0.05 to 7%, and more preferably from 0.1 to 6%.

The curable and electrochemically debondable one-component (1K) structural adhesive composition according to the present invention may further comprise adjuvants and additives that can impart improved properties to these compositions. For instance, the adjuvants and additives may impart one or more of: improved elastic properties; improved elastic recovery; longer enabled processing time; faster curing time; and lower residual tack. Included among such adjuvants and additives are: solubilizers; plasticizers; stabilizers including UV stabilizers; antioxidants; reactive diluents; drying agents; adhesion promoters; fungicides; flame retardants; colour pigments or colour pastes; and/or optionally also, to a small extent, non-reactive diluents.

Such adjuvants and additives can be used in such combination and proportions as desired, provided they do not adversely affect the nature and essential properties of the composition. While exceptions may exist in some cases, these adjuvants and additives should not *in toto* comprise more than 20 wt.% of the total composition and preferably should not comprise more than 10 wt.% of the composition.

To form the curable and electrochemically debondable one-component (1K) structural adhesive composition, the above-described ingredients are brought together and mixed. To form one component (1K) curable composition, the components of the composition are brought together and homogeneously mixed under conditions which inhibit or prevent the reactive components from reacting: this might include mixing conditions which limit or prevent exposure to moisture, heat or irradiation or which limit or prevent the activation of a constituent latent catalyst. As such, the ingredients are mixed by machine - a static or dynamic mixer, for example - in pre-determined amounts under anhydrous conditions without intentional heating or photo-irradiation.

The present invention relates to a cured product of the electrochemically debondable one-component (1K) structural adhesive composition according to the present invention.

The curing of the applied compositions according to the present invention typically occurs at temperatures in the range of from 80°C to 140°C, preferably 100°C to 120°C. The time for the cure is from 10 to 120 minutes, preferably from 30 to 60 minutes. The temperature that is suitable depends on the specific compounds present and the desired curing rate and can be determined in the individual case by the skilled artisan, using simple preliminary tests if necessary.

The electrochemically debondable one-component (1K) structural adhesive composition or the cured product according to the present invention can be used in electronic devices.

Non-limiting examples of electric devices can be mentioned handheld devices, laptops, white goods, automotive applications, and aerospace applications.

The present invention also relates to a bonded structure comprising a) a first substrate having an electrically conductive surface; and b) a second substrate having an electrically conductive surface; wherein the electrochemically debondable one-component (1K) structural adhesive composition or the cured product is deposited between the electrically conductive surfaces of the first and second substrates.

The initial use of the one component (1K) curable compositions in the formation of a bonded structure will now be described. The above-described compositions are applied to the material layer(s) and then cured *in situ.* Prior to applying the compositions, it is often advisable to pre-treat the relevant surfaces to remove foreign matter there from: this step can, if applicable, facilitate the subsequent adhesion of the compositions thereto. Such treatments are known in the art and can be performed in a single or multi-stage manner constituted by, for instance, the use of one or more of: an etching treatment with an acid suitable for the substrate and optionally an oxidizing agent; sonication; plasma treatment, including chemical plasma treatment, corona treatment, atmospheric plasma treatment and flame plasma treatment; immersion in a waterborne alkaline degreasing bath; treatment with a waterborne cleaning emulsion or solution; treatment with a cleaning solvent, such as carbon tetrachloride or trichloroethylene or alcohols such as hexanol and isopropanol or hydrocarbons such as ethyl acetate; and, water rinsing, preferably with deionized or demineralized water. In those instances where a waterborne alkaline degreasing bath is used, any of the degreasing agent remaining on the surface should desirably be removed by rinsing the substrate surface with deionized or demineralized water.

In some embodiments, the adhesion of the coating compositions of the present invention to the preferably pre-treated substrate may be facilitated by the application of a primer thereto. Indeed, primer compositions may be necessary to ensure efficacious fixture and / or cure times of the adhesive compositions on inactive substrates.

The compositions according to the present invention are then applied to the preferably pre-treated, optionally primed surfaces of the substrate by conventional application methods such as: bead dispensing; brushing; roll coating; doctor-blade application; and printing methods.

As noted above, the present invention provides a bonded structure comprising: a first substrate having an electrically conductive surface; and, a second substrate having an electrically conductive surface, wherein the cured electrochemically debondable one-part (1K) adhesive composition as defined hereinabove and in the appended claims is deposited between said first and second substrates. To produce such a structure, the adhesive composition may be applied to at least one internal surface of the first and / or second substrate and the two layers then subsequently contacted, optionally under the application of pressure, such that the electrically debondable adhesive composition is interposed between the two substrates.

It is recommended that the compositions be applied to a surface at a wet film thickness of from 10 to 500 µm.

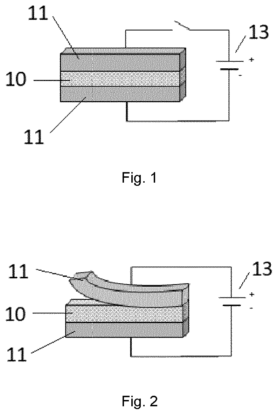

The initial bonding and subsequent debonding of the compositions of the present invention will be described with reference to the appended drawings in which: Figure 1 illustrates a bonded structure according to the present invention. Figure 2 illustrates the initial debonding of the structure upon passage of a current across that structure.

As shown in Figure 1 appended hereto, a bonded structure is provided in which a layer of cured adhesive (10) is deposited between two conductive substrates (11). Each layer of conductive substrate (11) is in electrical contact with an electrical power source (13) which may be a battery or an AC-driven source of direct current (DC). The positive and negative poles of that power source (13) are shown in one fixed position, but the skilled artisan will of course recognize that the polarity of the system can be reversed.

The two conductive substrates (11) are shown in the form of a layer which may be constituted by *inter alia*: a metallic film; a metallic sheet; a metallic mesh or grid; deposited metal particles; a resinous material which is rendered conductive by virtue of conductive elements disposed therein; or, a conducting oxide layer. As exemplary conductive elements there may be mentioned silver filaments, single-walled carbon nanotubes and multi-walled carbon nanotubes. As exemplary conducting oxides there may be mentioned: doped indium oxides, such as indium tin oxide (ITO); doped zinc oxide; antimony tin oxide; cadmium stannate; and zinc stannate. The selection of the conductive material aside, the skilled artisan will recognize that the efficacy of the debonding operation may be diminished where the conductive substrates (11) are in the form of a grid or mesh which offers limited contact with the layer of cured adhesive (10).

The present invention also relates to a method of debonding the bonded structure, the method comprising the steps of: 1) applying a voltage across both surfaces to form an anodic interface and a cathodic interface, preferably voltage of from 5 to 70V is applied for from 1 to 60 minutes; and 2) debonding the surfaces. Preferably, the voltage applied is from 20 to 50V for from 10 to 300 minutes.

When an electrical voltage is applied between each conductive substrates (11), current is supplied to the adhesive composition (10) deposited there between. This induces electrochemical reactions at the interface of the substrates (11) and the adhesive composition, which electrochemical reactions are understood as oxidative at the positively charged or anodic interface and reductive at the negatively charged or cathodic interface. The reactions are considered to weaken the adhesive bond between the substrates allowing the easy removal of the debondable composition from the substrate.

It is however noted that the composition of the adhesive layer (10) may be adjusted so that debonding occurs at either the positive or negative interface or simultaneously from both. For some embodiments, a voltage applied across both surfaces so as to form an anodic interface and a cathodic interface will cause debonding to occur simultaneously at both the anodic and cathodic adhesive / substrate interfaces. In an alternative embodiment, reversed polarity may be used to simultaneously debond both substrate / adhesive interfaces.

It is desired that after the debonding, the adhesive composition is disposed solely on a first substrate or on a second substrate, meaning that one of the substrates is substantially free of adhesive.

### Examples

Methyl methacrylate (MMA) from Sigma Aldrich
Methacrylic acid (MAA) from Sigma Aldrich
2-hydroxyethyl methacrylate (HEMA) from Acros Organics
2-hydroxypropyl methacrylate (HPMA) from Alfa Aesar
Isobornyl acrylate (IBOA) from Sartomer
Isobornyl methacrylate (IBOMA) from Sartomer
Difunctional aliphatic urethane methacrylate oligomer CN1993CG from Sartomer
2-hydroxyethyl methacrylate phosphate SR9054 from Sartomer
Core-shell toughener (methylmethacrylate-butadiene-styrene, MBS) Clearstrength XT from Arkema Inc.
Toughener based on ABS terpolymer Blendex 338 from Galata Chemicals
Toughener based on acrylonitrile butadiene rubber Nipol 1472X from Zeon Chemicals
Reactive toughener based on methacrylate-terminated polybutadiene HYPRO 2000X168 LC from Huntsman
Toughener based on acrylic block copolymer Kurarity LA 4285 from Kuraray
Linear block copolymer based on styrene and butadiene with bound styrene of 40% mass Kraton D1155 from Kraton Corporation
Zinc oxide ZnO from Sigma Aldrich
Hydrophilic fumed silica Aerosil 200 from Evonik Industries
Benzoyl peroxide BPO from PanReac AppliChem
1-Butyl-3-methylimidazolium bis(trifluoromethylsulfonyl)imide BMIM NTf2 from Sigma Aldrich
Trihexyltetradecylphosphonium bis(trifluoromethylsulfonyl)amide Cyphos IL 109 from Solvay
1-Dodecyl-3-methylimidazolium bis(trifluoromethylsulfonyl)imide DDMIM NTf2 from lolitec

### Example 1

The compositions were prepared in accordance with table 1. Compositions according to compositions 1 to 3 all had hydrophobic final matrix.

The tougheners Blendex 338 and Nipol 1472X were first dissolved in the respective acrylic monomers overnight. A stirring plate may be used to accelerate the dissolution process. All other ingredients are added, and BMIM NTf2 and DDMIM NTf2 were used as a reference electrolytes showing good stability properties based on Compositions 1 to 3. The final mixture was obtained by speed mixing all ingredients at once in one pot at 3000 rpm for 1 minute, for 3 consecutive times with a delay of 5 minutes to let the formulation cool down.

**Table 1**

| Ingredient | Composition 1 | Composition 2 | Composition 3 |
|---|---|---|---|
| | wt% | wt% | wt% |
| CN1993CG | 22.49 | 22.49 | 22.49 |
| SR9054 | 11.24 | 11.24 | 11.24 |
| Blendex 338 | 6.00 | | |
| Clearstrength XT 100 | | 6.00 | 6.00 |
| Nipol 1472X | 6.00 | 6.00 | 6.00 |
| HYPRO 2000X168LC Polymer - VTB | 6.00 | 6.00 | 6.00 |
| ZnO | 1.50 | 1.50 | 1.50 |
| BPO | 2.25 | 2.25 | 2.25 |
| Aerosil 200 | 1.50 | 1.50 | 1.50 |
| HPMA | 29.99 | | |
| IBOA | | | 29.99 |
| IBOMA | | 29.99 | |
| BMIM NTf2 | | 13.04 | 13.04 |
| DDMIM NTf2 | 13.04 | | |

The application substrate for all the formulations was aluminium (AA6016). Aluminium was cut into pieces of 2.5 cm × 10 cm in size and 1.25 mm in thickness. Glass beads (100 to 200 microns diameter) were used as spacers to control the thickness of the coating composition applied between two substrates. Tensile lap shear (TLS) was measured according to EN 1465:2009 (German version) *Based on Adhesives* - *Determination of tensile lap-shear strength of bonded assemblies* at room temperature.

The bond overlapping area for each stated substrate was 2.5 cm × 1.0 cm with a bond thickness of 0.1 cm (40 mil). The applied adhesive compositions were cured in the overlapping region by the application of a temperature of 80 °C for 30 minutes and 120 °C for 30 minutes. The bonded structures were subsequently stored at room temperature for 24 hours prior to initial tensile testing or storing them in a climate chamber for accelerated ageing studies at 65 °C and 90% relative humidity. Tensile lap shear strength values were measured after 24 hours storage period both prior and subsequent application of a constant potential of 50 V across the adhesive layer for a duration of 30 minutes, and after storage in the climate chamber at 65 °C and 90% relative humidity, respectively. The results are documented in Table 2 herein below.

**Table 2**

| | Initial | | 1 Week Storage | |
|---|---|---|---|---|
| | Shear Strength (MPa) 0 V | Shear Strength (MPa) 50 V, 30 min | Shear Strength (MPa) 0 V | Shear Strength (MPa) 50 V, 30 min |
| Composition 1 | 23.15 ± 0.14 | 4.58 ± 0.96 | 11.00 ± 0.30 | 0.67 ± 0.16 |
| Composition 2 | 15.50 ± 0.36 | 0.79 ± 0.21 | 13.03 ± 0.36 | 0.20 ± 0.06 |
| Composition 3 | 15.14 ± 1.25 | 1.10 ± 0.12 | 14.78 ± 0.45 | 0.31 ± 0.10 |

Compositions 1-3 all showed good performance. Especially compositions 2 and 3 both showed excellent stability and delamination performance even after storage for 1 week at 65 °C and 90% relative humidity.

### Example 2

The compositions were prepared in accordance with table 3. Additional impact modifiers and tackifiers were included in compositions 4 and 5. In addition acidic acrylic phosphate SR9054 was interchanged with methacrylic acid. A mixture of the MMA and HPMA was tested, again in an effort to obtain a hydrophobic final matrix. The tougheners Blendex 338, Clearstrength XT 100 and Nipol 1472X were first dissolved in HPMA, while Kurarity LA 4285 and Kraton D1155 were separately dissolved in MMA. A stirring plate may be used to accelerate the dissolution process. After dissolutions, both mixtures were joined in a single pot and all other ingredients were added and DDMIM NTf2 was used as a reference electrolyte showing good hydrophobic properties based on compositions 1 to 3. The final mixture was obtained by speed mixing all ingredients at once in one pot at 3000 rpm for 1 minute, for 3 consecutive times with a delay of 5 minutes to let the formulation cool down.

**Table 3**

| Ingredient | Composition 4 | Composition 5 |
|---|---|---|
| | wt% | wt% |
| SR9054 | | 10.19 |
| MAA | 10.19 | |
| Blendex 338 | 4.08 | 4.08 |
| Clearstrength XT 100 | 4.08 | 4.08 |
| Nipol 1472X | 4.08 | 4.08 |
| HYPRO 2000X168LC Polymer - VTB | 4.08 | 4.08 |
| ZnO | 1.36 | 1.36 |
| BPO | 2.04 | 2.04 |
| Aerosil 200 | 1.36 | 1.36 |
| Kurarity LA 4285 | 4.08 | 4.08 |
| Kraton D1155 | 4.08 | 4.08 |
| MMA | 6.79 | 6.79 |
| HPMA | 40.76 | 40.76 |
| DDMIM NTf2 | 13.04 | 13.04 |

The application substrate for all the formulations was aluminium (AA6016). Aluminium was cut into pieces of 2.5 cm × 10 cm in size and 1.25 mm in thickness. Glass beads (100 to 200 microns diameter) were used as spacers to control the thickness of the coating composition applied between two substrates. Tensile lap shear (TLS) was measured according to EN 1465:2009 (German version) *Based on Adhesives* - *Determination of tensile lap-shear strength of bonded assemblies* at room temperature.

The bond overlapping area for each stated substrate was 2.5 cm × 1.0 cm with a bond thickness of 0.1 cm (40 mil). The applied adhesive compositions were cured in the overlapping region by the application of a temperature of 80 °C for 30 minutes and 120 °C for 30 minutes. The bonded structures were subsequently stored at room temperature for 24 hours prior to initial tensile testing or storing them in a climate chamber for accelerated ageing studies at 65 °C and 90% relative humidity. Tensile lap shear strength values were measured after 24 hours storage period both prior and subsequent application of a constant potential of 50 V across the adhesive layer for a duration of 30 minutes, and after storage in the climate chamber at 65 °C and 90% relative humidity, respectively. The results are documented in Table 4 herein below.

**Table 4**

| | Initial | | 1 Week Storage | | 3 Weeks Storage | |
|---|---|---|---|---|---|---|
| | Shear Strength (MPa) 0 V | Shear Strength (MPa) 50 V, 30 min | Shear Strength (MPa) 0 V | Shear Strength (MPa) 50 V, 30 min | Shear Strength (MPa) 0 V | Shear Strength (MPa) 50 V, 30 min |
| Composition 4 | 10.59 ± 0.23 | 1.93 ± 0.32 | 10.40 ± 0.31 | 2.67 ± 0.20 | 9.40 ± 0.31 | 1.59 ± 0.40 |
| Composition 5 | 11.51 ± 0.16 | 2.99 ± 0.15 | 9.69 ± 0.47 | 0.95 ± 0.13 | 8.02 ± 0.21 | 0.17 ± 0.01 |

Both formulations of compositions 4 and 5 were extremely stable. The use of MAA in composition 4 showed a slightly lower initial strength compared to composition 5, however it remained more stable after storage at 65 °C and 90% relative humidity for up to 3 weeks. The electrochemical delamination performance was excellent in both compositions.

### Example 3

The composition was prepared in accordance with table 5. All ingredients were added together and speed-mixed at 3000 rpm for 1 minute, for 3 consecutive times with a delay of 5 minutes to let the formulation cool down.

**Table 5**

| Ingredient | Composition 6 (comparative) |
|---|---|
| | wt% |
| CN1993CG | 33.33 |
| SR9054 | 16.67 |
| BPO | 5.56 |
| HEMA | 44.44 |

The application substrate for all the formulations was aluminium (AA6016). Aluminium was cut into pieces of 2.5 cm × 10 cm in size and 1.25 mm in thickness. Glass beads (100 to 200 microns diameter) were used as spacers to control the thickness of the coating composition applied between two substrates. Tensile lap shear (TLS) was measured according to EN 1465:2009 (German version) *Based on Adhesives* - *Determination of tensile lap-shear strength of bonded assemblies* at room temperature.

The bond overlapping area for each stated substrate was 2.5 cm × 1.0 cm with a bond thickness of 0.1 cm (40 mil). The applied adhesive compositions were cured in the overlapping region by the application of a temperature of 80 °C for 30 minutes and 120 °C for 30 minutes. The bonded structures were subsequently stored at room temperature for 24 hours prior to initial tensile testing or storing them in a climate chamber for accelerated ageing studies at 65 °C and 90% relative humidity. Tensile lap shear strength values are documented in Table 6 herein below.

**Table 6**

| | Shear Strength (MPa) Initial | Shear Strength (MPa) 24-Hour Storage |
|---|---|---|
| Composition 6 (comparative) | 20.35 ± 2.94 | 13.63 ± 0.91 |

Composition 6, without core-shell tougheners and tougheners, did not show good stability after storage for 1 day at 65 °C and 90% relative humidity.

## Claims

1. A curable and electrochemically debondable one-component (1K) structural adhesive composition comprising
a) a (meth)acrylate monomer selected from the group consisting of hydroxypropyl acrylate, hydroxypropyl methacrylate, hydroxybutyl methacrylate, isobornyl acrylate, isobornyl methacrylate, methyl methacrylate and mixtures thereof;
b) an electrolyte selected from the group consisting of 1-butyl-3-methylimidazolium bis(trifluoromethylsulfonyl) imide, 1-pentyl-3-methylimidazolium bis (trifluoromethylsulfonyl) imide, 1-hexyl-3-methylimidazolium bis (trifluoromethylsulfonyl) imide, 1-heptyl-3-methylimidazolium bis (trifluoromethylsulfonyl) imide, 1-octyl-3-methylimidazolium bis (trifluoromethylsulfonyl) imide, 1-nonyl-3-methylimidazolium bis (trifluoromethylsulfonyl) imide, 1-decyl-3-methylimidazolium bis (trifluoromethylsulfonyl) imide, 1-dodecyl-3-methylimidazolium bis (trifluoromethylsulfonyl) imide, 1-tetradecyl-3-methylimidazolium bis (trifluoromethylsulfonyl) imide, 1-hexadecyl-3-methylimidazolium bis (trifluoromethylsulfonyl) imide, 1-octadecyl-3-methylimidazolium bis (trifluoromethylsulfonyl) imide, trihexyltetradecylphosphonium bis (trifluoromethylsulfonyl) amide, and mixtures thereof;
c) a co-polymerisable acid;
d) an initiator;
e) a core shell toughener; and
f) a toughener.

2. The curable and electrochemically debondable one-component (1K) structural adhesive composition according to claim 1, wherein the (meth)acrylate monomer is present from 20 to 55% based on the total weight of the composition, preferably from 23 to 52%, and more preferably from 26 to 50%.

3. The curable and electrochemically debondable one-component (1K) structural adhesive composition according to claim 1 or 2, wherein the electrolyte is present from 6 to 25% based on the total weight of the composition, preferably from 7 to 23%, and more preferably from 10 to 20%.

4. The curable and electrochemically debondable one-component (1K) structural adhesive composition according to any of claims 1 to 3, wherein the co-polymerisable acid is selected from the group consisting of acrylic acid, methacrylic acid, 2-hydroxyethyl(meth)acrylate phosphoric acid ester, hydroxypropyl(meth)acrylate phosphoric acid ester and mixtures thereof.

5. The curable and electrochemically debondable one-component (1K) structural adhesive composition according to any of claims 1 to 4, wherein the co-polymerisable acid is present from 5 to 20% based on the total weight of the composition, preferably from 7 to 18%, and more preferably from 9 to 16%.

6. The curable and electrochemically debondable one-component (1K) structural adhesive composition according to any of claims 1 to 5, wherein the initiator is a peroxide, preferably selected from the group consisting of tert-butyl peroxide, tert-butyl perbenzoate, cumene hydroperoxide, tert-butyl peroxybenzoate, diacetyl peroxide, benzoyl peroxide, tert-butyl peracetate, lauryl peroxide and mixtures thereof, more preferably the initiator is benzoyl peroxide.

7. The curable and electrochemically debondable one-component (1K) structural adhesive composition according to any of claims 1 to 6, wherein the initiator is present from 0.1 to 7% based on the total weight of the composition, preferably from 0.5 to 6%, and more preferably from 1 to 5%.

8. The curable and electrochemically debondable one-component (1K) structural adhesive composition according to any of claims 1 to 7, wherein the core-shell toughener comprises a single core-shell toughener or a mixture of two or more core-shell tougheners, preferably the core-shell toughener has a shell which is comprised of a polymer or co-polymer of one or more monomers selected from the group consisting of methyl methacrylate, styrene, acrylonitrile, acrylic acid, (meth)acrylamides and mixtures thereof; and a core which is comprised of a homopolymer or copolymer selected from the group consisting of a homopolymer of butadiene; a homopolymer of isoprene; a co-polymer of butadiene with vinyl aromatic monomers, (meth)acrylonitrile or (meth)acrylates; a co-polymer of isoprene with vinyl aromatic monomers, (meth)acrylonitrile or (meth)acrylates; polybutylacrylate; polydimethylsiloxane; crosslinked polydimethylsiloxane, and mixtures thereof.

9. The curable and electrochemically debondable one-component (1K) structural adhesive composition according to any of claims 1 to 8, wherein the core-shell toughener is present from 2 to 15% based on the total weight of the composition, preferably from 3 to 11%, and more preferably from 3 to 10%.

10. The curable and electrochemically debondable one-component (1K) structural adhesive composition according to any of claims 1 to 9, wherein the toughener is selected from the group consisting of methacrylate terminated polybutadiene rubber, carboxylic terminated copolymer of butadiene and acrylonitrile, carboxylic terminated styrene butadiene rubber, carboxylic terminated styrene butadiene styrene rubber, ethylene/propylene/diene terpolymers, (meth)acrylonitrile-butadiene copolymers, (meth)acrylonitrile-styrene copolymers, (meth)acrylonitrile-butadiene-styrene copolymers, styrene-isoprene-styrene copolymers, styrene-butadiene-styrene copolymers, A-B-A triblock copolymers having blocks A and B composed of C₁-C₈ alkyl (meth)acrylates, triblock copolymers based on methyl (meth)acrylate (MMA), n-butyl acrylate (nBA) and 2-ethylhexyl acrylate (2-EHA), and mixtures thereof.

11. The curable and electrochemically debondable one-component (1K) structural adhesive composition according to claim 10, wherein the toughener is present from 3 to 35% based on the total weight of the composition, preferably from 6 to 26%, and more preferably from 11 to 23.

12. A cured product of the electrochemically debondable one-component (1K) structural adhesive composition according to any of claims 1 to 11.

13. Use of the electrochemically debondable one-component (1K) structural adhesive composition according to any of claims 1 to 11 or the cured product according to claim 12 in electronic devices.

14. A bonded structure comprising
a) a first substrate having an electrically conductive surface; and,
b) a second substrate having an electrically conductive surface;
wherein the electrochemically debondable one-component (1K) structural adhesive composition according to any of claims 1 to 11 or the cured product according to claim 12 is deposited between the electrically conductive surfaces of the first and second substrates.

15. A method of debonding said bonded structure according to claim 14, the method comprising the steps of:
1) applying a voltage across both surfaces to form an anodic interface and a cathodic interface, preferably voltage of from 5 to 70 V is applied for from 1 to 60 minutes; and
2) debonding the surfaces.
